# EUROPEAN PATENT APPLICATION

(11) **EP 4 099 679 A1**
(43) Date of publication of application: **07.12.2022**
(21) Application number: 21176815.5
(22) Date of filing: 31.05.2021
(51) Int. Cl.: H04N 5/232

(54) **METHOD AND APPARATUS FOR OPERATING A CAMERA CONTROL SYSTEM**

(71) Applicant: Robert Bosch GmbH, 70442 Stuttgart (DE)
(72) Inventor: VON HOYNINGEN-HUENE, Johannes, 24145 Kiel (DE); GUILLAUME, René, 71032 Böblingen (DE); THEIN, Christoph, 31139 Hildesheim (DE); ROSTAMI, Ahmad, 171 61 Solna (SE)

(57) **Abstract**

Method of operating a control system for controlling at least one camera, comprising: determining position information characterizing a position of at least one object, determining, based on the position information, control information for at least temporarily controlling an operation of the control system and/or an operation of the at least one camera.

## Description

### Field of the Disclosure

Exemplary embodiments relate to a method of operating a control system for controlling at least one camera.

Further exemplary embodiments relate to an apparatus for operating a control system for controlling at least one camera.

### Summary

Some embodiments relate to a method of operating a control system for controlling at least one camera, comprising: determining position information characterizing a position of at least one object, determining, based on the position information, control information for at least temporarily controlling an operation of the control system and/or an operation of the at least one camera.

In some embodiments, the at least one object may e.g. be a mobile and/or moving object, such as e.g. a vehicle, e.g. an automated guided vehicle, AGV.

In some embodiments, a plurality of cameras, e.g. two or more cameras, may be controlled based on the position information. In some embodiments, a network of cameras comprising e.g. more than ten or hundred cameras may be controlled based on the position information.

In some embodiments, determining the position information comprises at least one of: a) receiving the position information, e.g. from a localization system, e.g. an external localization system, b) determining the position information, e.g. by the control system and/or a component of the control system itself. In some embodiments, the control system may comprise a localization system, which may e.g. be configured to provide the position information.

In some embodiments, the localization system may be realized using at least one wireless technology, like Ultra wideband (UWB) or 5G (mobile communications system of the fifth generation).

In some embodiments, the localization system may be configured to provide the position information indicative e.g. of the location of the at least one object, e.g. in a certain area, e.g. in an online manner, for example, repeatedly, e.g. periodically. As an example, the at least one object may be or comprise an automated guided vehicle, AGV, moving in a production hall. In some embodiments, the certain area may also be covered by a plurality of cameras, at least some of which may e.g. be at least temporarily be controlled by the control system according to the embodiments.

In some embodiments, one or more processing devices, e.g. video processing units, may be provided, e.g. for processing camera data as obtainable by the plurality of cameras.

In some embodiments, the method (further) comprises: optimizing an operation of the at least one camera according to at least one optimization criterion, wherein for example the at least one optimization criterion is at least one of: a) electrical energy consumption, b) usage of network resources of a network the at least one camera is configured to use for data exchange. As an example, in some embodiments, the at least one camera may be activated if the position information indicate that the at least one object is within a region covered by the at least one camera, whereas the at least one camera may e.g. be deactivated if the position information indicate that the at least one object is not within a region covered by the at least one camera.

In some embodiments, one can e.g. optimize what cameras (e.g., which of the plurality of cameras) need to be activated, e.g. at what time, e.g. with which configuration (field of view, angular position/orientation, infrared or daylight mode, and the like). In some embodiments, optimizations of this type may e.g. enable to reduce a required processing capacity for processing the camera data, and/or the required networking capacity to transmit the camera data, e.g. from the respective camera(s) to a data sink such as a video processing unit for processing the camera data. In some embodiments, the aforementioned optimizations may enable to improve energy efficiency of a system comprising the plurality of cameras.

In some embodiments, relaxed requirements on a network capacity (e.g., due temporary deactivation of the at least one camera, e.g. if the at least one object is not covered by the camera) can be beneficial, as it may imply that, in some embodiments, a network with a lower network capacity may be installed.

In terms of further possible optimizations of the control system according to the embodiments, in some embodiments, for instance, the proposed approach can be used for at least one of: a) completely shutting down cameras in temporarily unused areas, e.g. to improve energy efficiency and decrease the utilization of valuable network resources, b) decreasing the resolution (e.g., number of pixels associated with a camera image) of cameras in temporarily unused areas to optimize power consumption and/or network utilization while e.g. still allowing providing basic operation with less strict requirements, c) decreasing a prioritization of data from temporarily less important cameras in the network, e.g. to increase network utilization and/or to provide real-time guarantees or quality of service, for e.g. video inspection in dedicated areas, d) reducing a frame rate (e.g., number of pictures/frames sent per second).

In some embodiments, the method comprises at least one of: a) controlling, e.g. by means of the control system, an activation and/or deactivation of the at least one camera, b) controlling, e.g. by means of the control system, a configuration of the at least one camera.

In other words, in some embodiments, the control system may control the configuration and/or activity of the cameras, e.g. based on the position information.

In some embodiments, controlling the configuration may e.g. include at least one of: a) activation/deactivation, b) change of capturing angles e.g. characterizing a field of view, c) zooming-in/zooming/out, d) change of the resolution and/or bit rate of a video data stream that may be provided by the respective camera.

In some embodiments, the control system runs an algorithm to optimize the operation of a plurality of cameras, which may e.g. be connected with at least one data sink such as a video processing device using at least one network ("network of cameras").

In some embodiments, the at least one camera may e.g. comprise a control interface, which may e.g. be controlled using a data link to the camera control interface, e.g. using the network.

In some embodiments, the control system may also comprise and/or host video processing server(s), where e.g. all or part of the processing of the videos captured by the cameras may take place.

In some embodiments, the communication between the cameras and the control system, i.e. both transferring capture videos to processing servers and camera control/configuration commands, may be realized through a communication network, which may comprise a wired network or a wireless network or any combination(s) thereof.

In some embodiments, the communication network may at least temporarily be configured and/or controlled by a (e.g., virtually) centralized network controller, e.g. using software defined networking (SDN) methods. In practice, in some embodiments, it might be possible that the communication network and the localization system are integrated into one system. For instance, in some embodiments, the communication network may be realized using a 5G system supporting accurate localization, wherein the 5G systems may e.g. be used for data transmission e.g. between the camera(s) and other devices such as e.g. the video or camera data processing servers and/or an apparatus performing the method according to the embodiments. Additionally, in some embodiments, the 5G system may also be used for localization, e.g. for providing the position information to the control system.

In some embodiments, the method comprises: determining network control information, e.g. based on at least one of the position information and the control information, for at least one network or the at least one network the at least one camera is configured to use for data exchange, and, optionally, controlling at least one component of the network based on the network control information. This way, in some embodiments, e.g. the network topology and/or operational parameters of the network may e.g. be adapted, e.g. based on the position information.

In some embodiments, the network control information indicates to the network, e.g. to a network controller, to a) activate and/or to deactivate at least a part of the network, and/or to b) prioritize network traffic associated with the at least one camera.

In some embodiments, the method further comprises at least one of: a) waiting for the position information and/or for updated position information, b) determining whether at least one of the control information and the network control information should be updated, e.g. based on at least one of the position information and the updated position information, c) providing a new control information and/or a new network control information, e.g. as the updated control information and/or the updated network control information, d) verifying a configuration characterized by the new control information and/or the new network control information, e.g. based on at least one of a feasibility, constraints, and policy, e) reconfiguring the at least one camera and/or at least one component of the control system and/or of the network, e.g. based on the new control information and/or a new network control information.

In some embodiments, the method further comprises: using camera data of the at least one camera, and, optionally, determining further position information based on the position information and the camera data. In other words, in some embodiments, an e.g. radio-based localization, e.g. the position information as e.g. obtained by a radio system, e.g. 5G system, may be enhanced based on data obtained from the at least one camera, e.g. from an optional camera-based localization of the at least one object. In some embodiments, e.g. by joint evaluation of the information (for example with sensor fusion algorithms) the localization accuracy of the estimation of the position, e.g. the precision of the position information, can be increased. Furthermore, in some embodiments, e.g. visual features of the at least one object (for example a number plate of a fork lift) and an identifier (ID) of a radio modem (such as e.g. a MAC (media access control) address) may be combined, e.g. to distinguish between different similar looking objects in a same area.

Some embodiments relate to an apparatus for performing the method according to at least one of the preceding claims.

Some embodiments relate to a control system for controlling at least one camera, e.g. a camera control system, comprising at least one apparatus according to the embodiments.

In some embodiments, the control system further comprises at least one of: a) the at least one camera, or a plurality of cameras, b) a or the localization system, c) a or the network controller, d) one or more processing devices, e.g. for processing camera data, e.g. video processing devices.

Some embodiments relate to a computer program comprising instructions which, when the program is executed by a computer, cause the computer to carry out the method according to the embodiments.

Some embodiments relate to a computer-readable storage medium comprising instructions which, when executed by a computer, cause the computer to carry out the method according to the embodiments.

Some embodiments relate to a data carrier signal carrying and/or characterizing the computer program according to the embodiments.

Some embodiments relate to a use of the method according to the embodiments and/or of the apparatus according to the embodiments and/or of the control system according to the embodiments and/or of the computer program according to the embodiments and/or of the computer-readable storage medium according to the embodiments and/or of the data carrier signal according to the embodiments for at least one of: a) determining control information for at least temporarily controlling an operation of the control system and/or an operation of the at least one camera, b) optimizing a resource usage of the camera system and/or of at least one component of the camera system, c) optimizing a resource usage of a network system associated with e.g. usable by the camera system and/or of at least one component of the camera system and/or of at least one component of the network system.

### Brief Description of Exemplary Figures

Some exemplary embodiments will now be described with reference to the accompanying drawings, in which:
- Fig. 1: schematically depicts a simplified block diagram according to exemplary embodiments,
- Fig. 2: schematically depicts a simplified flow-chart according to further exemplary embodiments,
- Fig. 3: schematically depicts a simplified flow-chart according to further exemplary embodiments,
- Fig. 4: schematically depicts a simplified flow-chart according to further exemplary embodiments,
- Fig. 5: schematically depicts a simplified flow-chart according to further exemplary embodiments,
- Fig. 6: schematically depicts a simplified flow-chart according to further exemplary embodiments,
- Fig. 7: schematically depicts a simplified flow-chart according to further exemplary embodiments,
- Fig. 8: schematically depicts a simplified block diagram of an apparatus according to further exemplary embodiments,
- Fig. 9: schematically depicts a simplified block diagram according to further exemplary embodiments,
- Fig. 10: schematically depicts a simplified block diagram according to further exemplary embodiments,
- Fig. 11: schematically depicts a simplified block diagram according to further exemplary embodiments,
- Fig. 12: schematically depicts a simplified flow-chart according to further exemplary embodiments, and
- Fig. 13: schematically depicts aspects of use according to further exemplary embodiments.

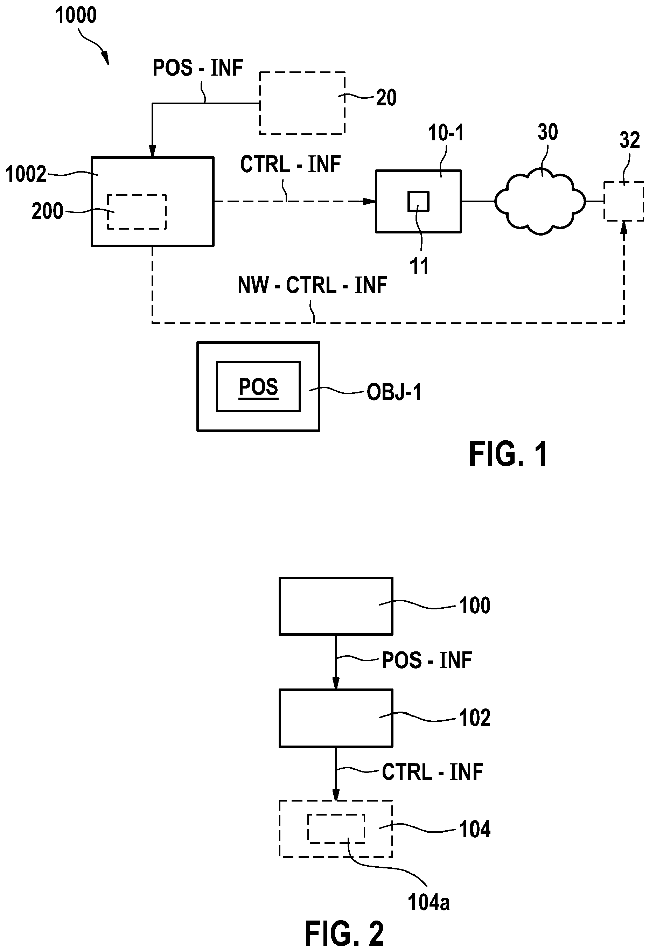

Some embodiments relate to a method of operating a control system 1000, see for example Fig. 1 and 2, for controlling at least one camera 10-1, comprising: determining 100 position information POS-INF characterizing a position POS (Fig. 1) of at least one object OBJ-1, determining 102 (Fig. 2), based on the position information POS-INF, control information CTRL-INF for at least temporarily controlling an operation of the control system 1000 and/or an operation of the at least one camera 10-1.

In some embodiments, the at least one object OBJ-1 may e.g. be a mobile and/or moving object, such as e.g. a vehicle, e.g. an automated guided vehicle, AGV.

Block 104 of Fig. 1 symbolizes an optional control of the control system 1000 and/or an operation of the at least one camera 10-1, e.g. based on the control information CTRL-INF.

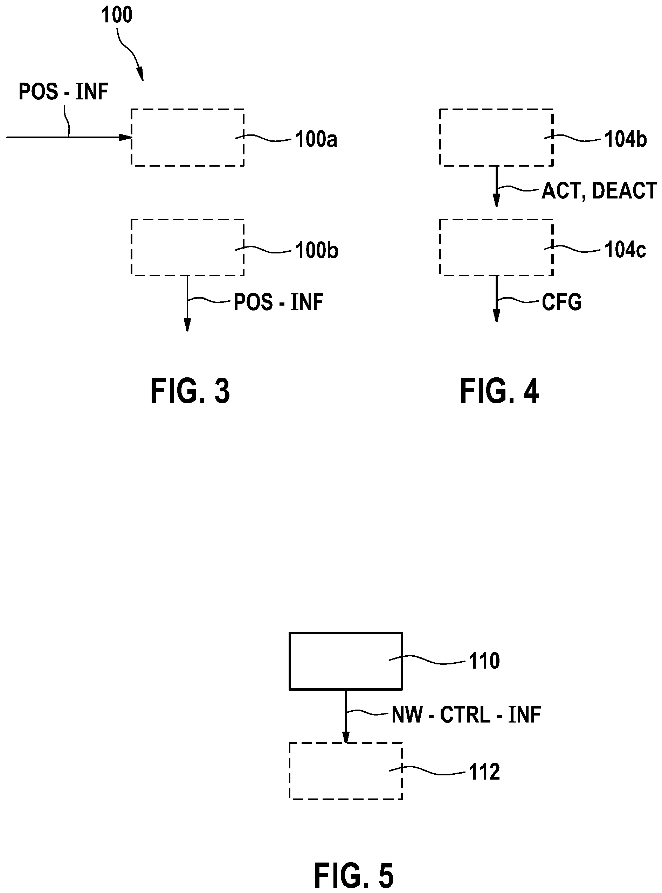

In some embodiments, see Fig. 3, determining the position information POS-INF comprises at least one of: a) receiving 100a the position information POS-INF, e.g. from a localization system 20 (Fig. 1), e.g. an external localization system, b) determining 100b (Fig. 3) the position information POS-INF, e.g. by the control system 1000 and/or a component 1002 of the control system itself, e.g. a control unit and/or other apparatus 200 e.g. configured to perform aspects according to the embodiments. In some embodiments, the control system 1000 may comprise a localization system 20, which may e.g. be configured to provide the position information POS-INF.

In some embodiments, the localization system 20 may be realized using at least one wireless technology, like Ultra wideband (UWB) or 5G (wireless communications system of the fifth generation).

In some embodiments, the localization system 20 may be configured to provide the position information POS-INF indicative e.g. of the location or position POS of the at least one object OBJ-1, e.g. in a certain area, e.g. in an online manner, for example, repeatedly, e.g. periodically. As an example, the at least one object OBJ-1 may be or comprise an automated guided vehicle, AGV, moving in a production hall. In some embodiments, the certain area may also be covered by a plurality of cameras, at least some of which may e.g. be at least temporarily be controlled by the control system according to the embodiments.

In some embodiments, one or more processing devices, e.g. video processing units, may be provided, e.g. for processing camera data as obtainable by the plurality of cameras.

In some embodiments, see Fig. 2, the method (further) comprises: optimizing 104a an operation of the at least one camera 10-1 according to at least one optimization criterion, wherein for example the at least one optimization criterion is at least one of: a) electrical energy consumption, b) usage of network resources of a network 30 (Fig. 1) the at least one camera 10-1 is configured to use for data exchange. As an example, in some embodiments, the at least one camera 10-1 may be activated if the position information POS-INF indicates that the at least one object OBJ-1 is within a region covered by the at least one camera 10-1, whereas the at least one camera 10-1 may e.g. be deactivated if the position information POS-INF indicates that the at least one object OBJ-1 is not within a region covered by the at least one camera 10-1.

In some embodiments, one can e.g. optimize what cameras (e.g., which of the plurality of cameras) need to be activated, e.g. at what time, e.g. with which configuration (field of view, angular position/orientation, infrared or daylight mode, and the like). In some embodiments, optimizations of this type may e.g. enable to reduce a required processing capacity for processing the camera data, and/or the required networking capacity to transmit the camera data, e.g. from the respective camera(s) to a data sink such as a video processing unit for processing the camera data. In some embodiments, the aforementioned optimizations may enable to improve energy efficiency of a system comprising the plurality of cameras.

In some embodiments, relaxed requirements on a network capacity (e.g., due temporary deactivation of the at least one camera, e.g. if the at least one object is not covered by the camera) can be beneficial, as it may imply that, in some embodiments, a network with a lower network capacity may be installed.

In terms of further possible optimizations of the control system 1000 according to the embodiments, in some embodiments, for instance, the proposed approach can be used for at least one of: a) completely shutting down cameras in temporarily unused areas, e.g. to improve energy efficiency and decrease the utilization of valuable network resources, b) decreasing the resolution (e.g., number of pixels associated with a camera image) of cameras in temporarily unused areas to optimize power consumption and/or network utilization while e.g. still allowing providing basic operation with less strict requirements, c) decreasing a prioritization of data from temporarily less important cameras in the network, e.g. to increase network utilization and/or to provide real-time guarantees or quality of service, for e.g. video inspection in dedicated areas.

In some embodiments, see for example Fig. 4, the method comprises at least one of: a) controlling 104b, e.g. by means of the control system 1000, an activation ACT and/or deactivation DEACT of the at least one camera 10-1, b) controlling 104c, e.g. by means of the control system 1000, a configuration CFG of the at least one camera 10-1.

In other words, in some embodiments, the control system 1000 may control the configuration and/or activity of the camera(s) 10-1, e.g. based on the position information POS-INF.

In some embodiments, controlling 104c the configuration may e.g. include at least one of: a) activation/deactivation, b) change of capturing angles e.g. characterizing a field of view, c) zooming-in/zooming/out, d) change of the resolution and/or bit rate of a video data stream that may be provided by the respective camera.

In some embodiments, the control system 1000 may be configured to run an algorithm to optimize the operation of a plurality of cameras, which may e.g. be connected with at least one data sink such as a video processing device using at least one network ("network of cameras") 30.

In some embodiments, the at least one camera 10-1 (Fig. 1) may e.g. comprise a control interface 11, which may e.g. be controlled using a data link to the camera control interface 11, e.g. using the network 30, e.g. a network connection between the control system 1000 or one of its components 1002, 200 and the camera control interface 11.

In some embodiments, the control system 1000 may also comprise and/or host video processing server(s), where e.g. all or part of the processing of the videos captured by the cameras may take place.

In some embodiments, the communication between the camera(s) 10-1 and the control system 1000, i.e. both transferring capture videos to processing servers and camera control/configuration commands, may be realized through a communication network 30, which may comprise a wired network or a wireless network or any combination(s) thereof.

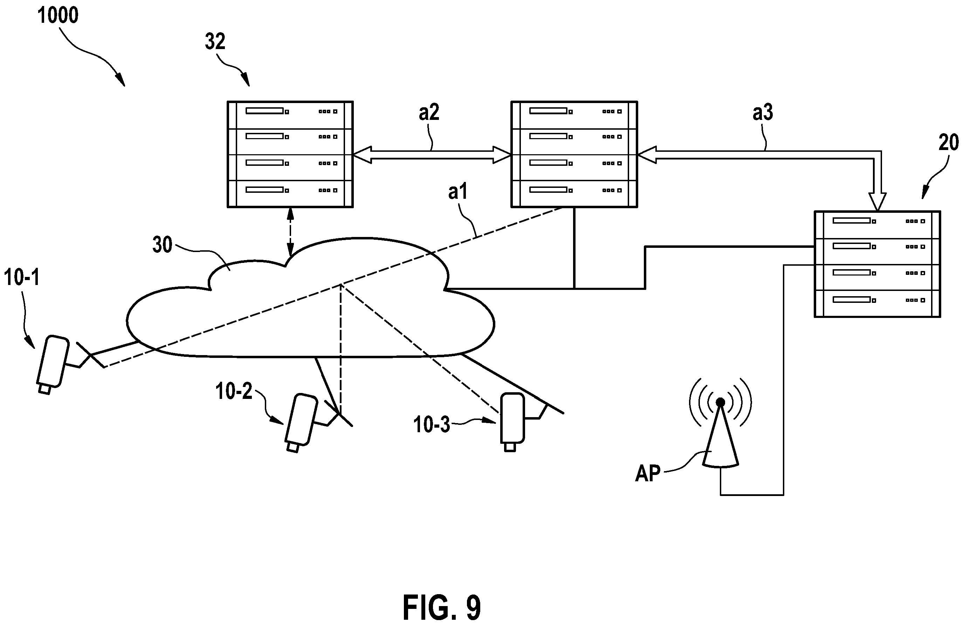

In some embodiments, see for example Fig. 9, the communication network 30 (Fig. 1) may at least temporarily be configured and/or controlled by a (e.g., virtually) centralized network controller 32, e.g. using software defined networking (SDN) methods. In practice, in some embodiments, it might be possible that the communication network 30 and the localization system 20 are integrated into one system. For instance, in some embodiments, the communication network 30 may be realized using a 5G system supporting accurate localization, wherein the 5G systems may e.g. be used for data transmission e.g. between the camera(s) and other devices such as e.g. the video or camera data processing servers and/or an apparatus performing the method according to the embodiments. Additionally, in some embodiments, the 5G system may also be used for localization, e.g. for providing the position information to the control system.

Reference sign AP in Fig. 9 symbolizes one access point, which may e.g. be used by the localization system 20 and/or by the network 30. Reference signs 10-1, 10-2, 10-2 symbolize three cameras which may e.g. be controlled by the control system 1000, see arrow a1, based on the position information that may be obtained by the control system 1000 from the localization system 20, see the arrow a3. Arrow a2 symbolizes an optional data exchange between the control system 1000 and the network controller 32.

In some embodiments, see Fig. 5, the method comprises: determining 110 network control information NW-CTRL-INF, e.g. based on at least one of the position information POS-INF and the control information CTRL-INF, for the at least one network 30 the at least one camera 10-1 is configured to use for data exchange, and, optionally, controlling 112 at least one component of the network 30 based on the network control information NW-CTRL-INF. This way, in some embodiments, e.g. the network topology and/or operational parameters of the network 30 may e.g. be adapted, e.g. based on the position information POS-INF.

In some embodiments, the network control information NW-CTRL-INF indicates to the network 30, e.g. to a network controller 32, to a) activate and/or to deactivate at least a part of the network, and/or to b) prioritize network traffic associated with the at least one camera, which may e.g. be implemented using SDN techniques.

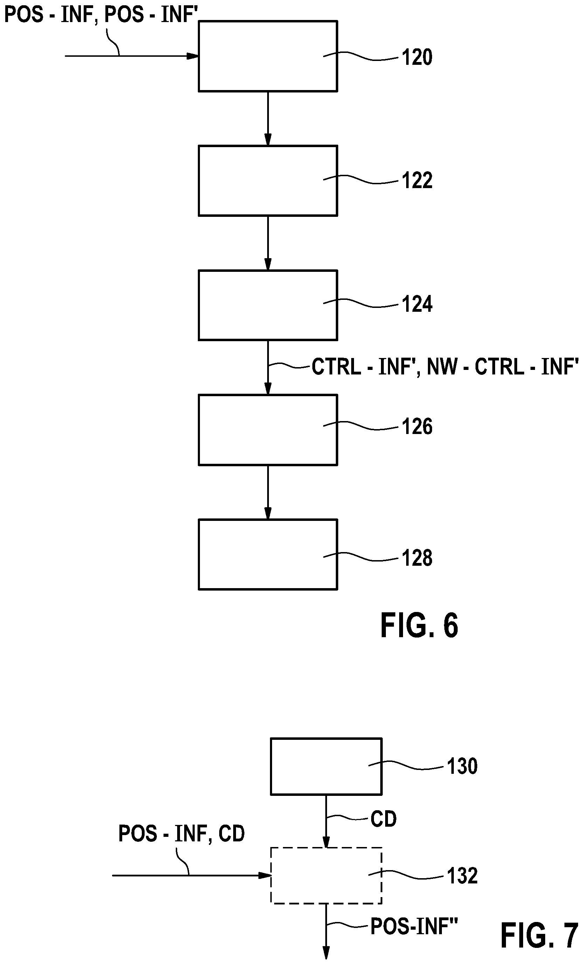

In some embodiments, Fig. 6, the method further comprises at least one of: a) waiting 120 for the position information POS-INF and/or for updated position information POS-INF' (e.g., as provided by the localization system 20), b) determining 122 whether at least one of the control information and the network control information should be updated, e.g. based on at least one of the position information and the updated position information, c) providing 124 a new control information CTRL-INF' and/or a new network control information NW-CTRL-INF', e.g. as the updated control information and/or the updated network control information, d) verifying 126 a configuration characterized by the new control information and/or the new network control information, e.g. based on at least one of a feasibility, constraints, and policy, e) reconfiguring 128 the at least one camera 10-1 and/or at least one component of the control system and/or of the network 30, e.g. based on the new control information and/or a new network control information.

In some embodiments, Fig. 7, the method further comprises: using 130 camera data CD of the at least one camera 10-1, and, optionally, determining 132 further position information POS-INF" based on the position information POS-INF and the camera data CD. In other words, in some embodiments, an e.g. radio-based localization, e.g. the position information POS-INF as e.g. obtained by a radio system, e.g. 5G system, may be enhanced based on data CD obtained from the at least one camera 10-1, e.g. from an optional camera-based localization of the at least one object. In some embodiments, e.g. by joint evaluation of the information POS-INF, CD (for example with sensor fusion algorithms) the localization accuracy of the estimation of the position, e.g. the precision of the position information POS-INF", can be increased. Furthermore, in some embodiments, e.g. visual features of the at least one object OBJ-1 (for example a number plate of a fork lift) and an identifier (ID) of a radio modem (such as e.g. a MAC (media access control) address) may be combined, e.g. to distinguish between different similar looking objects in a same area.

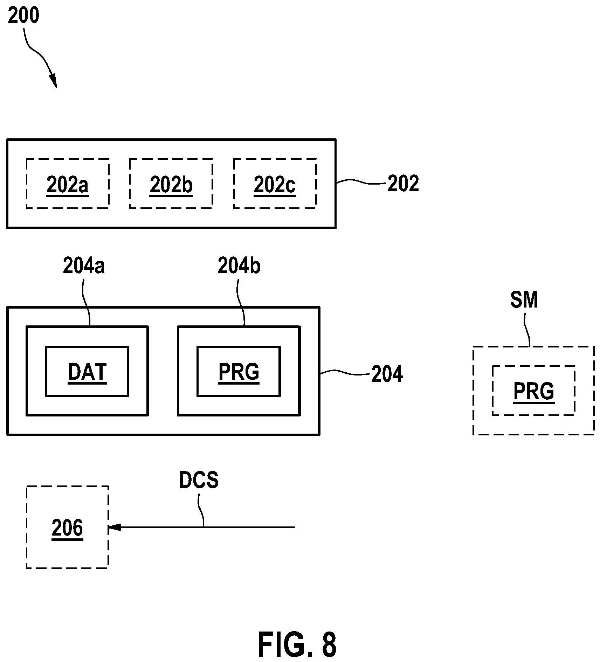

Some embodiments, Fig. 8, relate to an apparatus 200 for performing the method according to at least one of the preceding claims.

The apparatus 200 comprises at least one calculating unit 202 ("computer") and at least one memory unit 204 associated with (i.e., usably by) said at least one calculating unit 202 for at least temporarily storing a computer program PRG and/or data DAT, wherein said computer program PRG is e.g. configured to at least temporarily control an operation of said apparatus 200, e.g. the execution of a method according to the embodiments.

In some embodiments, the at least one calculating unit 202 comprises at least one core 202a, 202b, 202c for executing said computer program PRG or at least parts thereof, e.g. for executing the method according to the embodiments or at least one or more steps thereof.

In some embodiments, the at least one calculating unit 202 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). In some embodiments, any combination of two or more of these elements is also possible.

In some embodiments, the memory unit 204 comprises at least one of the following elements: a volatile memory 204a, particularly a random-access memory (RAM), a non-volatile memory 204b, particularly a Flash-EEPROM. Preferably, said computer program PRG is at least temporarily stored in said non-volatile memory 204b. Data DAT, which may e.g. be used for executing the method according to the embodiments, may at least temporarily be stored in said RAM 204a.

In some embodiments, an optional computer-readable storage medium SM comprising instructions, e.g. in the form of the computer program PRG, may be provided. As an example, the storage medium SM may comprise or represent a digital storage medium such as a semiconductor memory device (e.g., solid state drive, SSD) and/or a magnetic storage medium such as a disk or hard disk drive (HDD) and/or an optical storage medium such as a compact disc (CD) or DVD (digital versatile disc) or the like.

In some embodiments, the apparatus 200 may comprise an optional data interface 206, preferably for bidirectional data exchange with an external device (not shown), e.g. for connection with the network 30 and/or the camera(s) 10-1. As an example, by means of the data interface 206, a data carrier signal DCS may be received, e.g. from said external device, for example via a wired or a wireless data transmission medium, e.g. over a (virtual) private computer network and/or a public computer network such as e.g. the Internet. According to further preferred embodiments, the data carrier signal DCS may represent or carry the computer program PRG according to the embodiments, or at least a part thereof. In some embodiments, the data interface 206 may e.g. be used to transmit the control information CTRL-INF to the at least one camera 10-1, e.g. via the network 30.

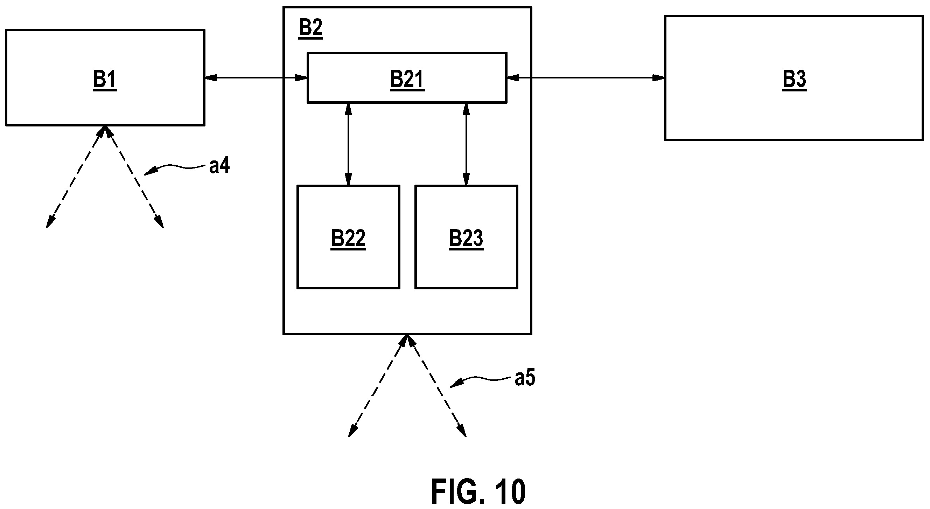

Fig. 10 exemplarily depicts aspects according to further embodiments. Block B1 symbolizes a network controller, block B2 symbolizes a control system according to the embodiments, and block B3 symbolizes a localization system.

Block B21 exemplarily depicts an optional smart control algorithm that may be used to control an operation of camera data processing servers B22 and/or the at least one camera, e.g. via camera control API (application programming interface) B23.

A network connectivity to the network controller B1 is symbolized in Fig. 10 by the arrows a4, and a connectivity to the camera(s) is symbolized in Fig. 10 by the arrows a5.

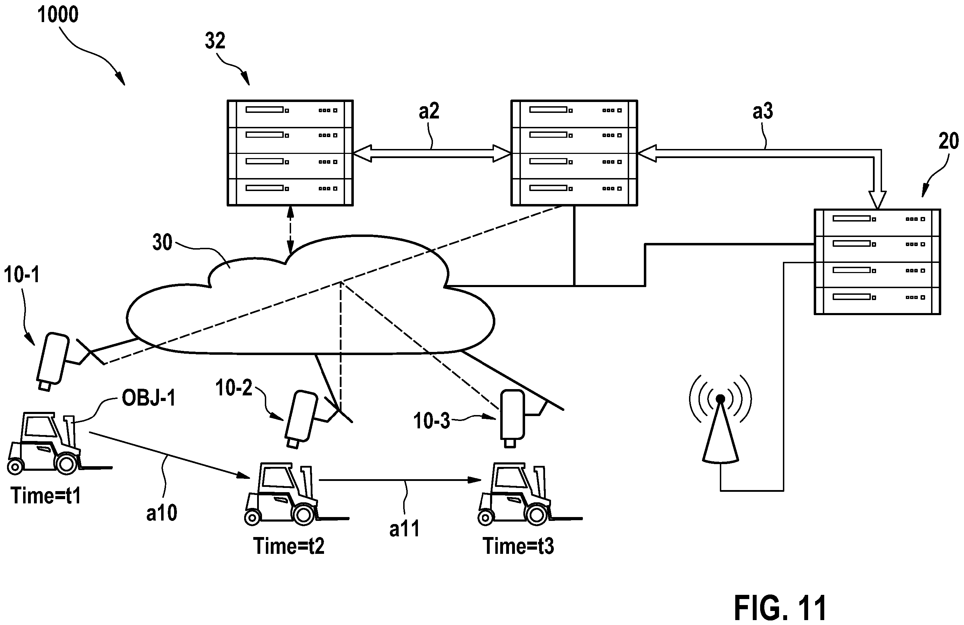

Fig. 11 exemplarily depicts aspects according to further embodiments. As an example, in some embodiments, a link a3 is established between the camera control system 1000 and the localization system 20 to share the position information POS-INF. In some embodiments, the control system 1000, e.g. its control unit 1002 or apparatus 200 (Fig. 1), may take the information POS-INF from the localization system 20, e.g. to decide on the configuration of the cameras 10-1, 10-2, 10-3 on the field. For example, as depicted in Fig. 11, at time t1 an AGV status can be captured by the camera 10-1, and therefore the other two cameras 10-2, 10-3 do not need to be active. And this may change to camera 10-2, and camera 10-3 at times t2 and t3, respectively, see the arrows a10, a11.

In some embodiments, knowing the location of the AGV OBJ-1 at times t1, t2, and t3 through the localization system 20, the control algorithm of the control system 1000 may e.g. activate and deactivate the cameras 10-1, 10-2, 10-3, e.g. to save resources in this setup.

In some embodiments, there is also a link a2 between the control system 1000 and the network controller 32, e.g., through an SDN controller application programming interface (API). The link a2 may e.g. be used to communicate to the network controller 32 the actual information NW-CTRL-INF on active cameras and their networking requirements, for instance in terms of required bandwidth, which can e.g. be used by the network controller 32, e.g. to optimize the network configurations accordingly.

For instance, in some embodiments, the network controller 32 might deactivate (or put into the sleep mode) parts of the network 30, which is not in use, or prioritize traffic of some active cameras over the others. In the example of Fig. 11, the network controller 32 can e.g. temporarily deactivate network elements not involved in a communication between the camera 10-1 and the control system 1000 at time t1. In some embodiments, similar or same measures may e.g. be applied at times t2 and t3 for other portions and/or the rest of the network 30.

An exemplary process of a camera control algorithm using the configuration of Fig. 11 has been explained above with reference to Fig. 6.

Some embodiments relate to a control system 1000 for controlling the at least one camera 10-1, e.g. a camera control system, comprising at least one apparatus 200 (Fig. 8) according to the embodiments.

In some embodiments, the control system 1000 further comprises at least one of: a) the at least one camera 10-1, or a plurality of cameras 10-1, 10-2, 10-3, b) a or the localization system 20, c) a or the network controller 32, d) one or more processing devices B22 (Fig. 10), e.g. for processing camera data CD, e.g. video processing devices and/or image processing devices.

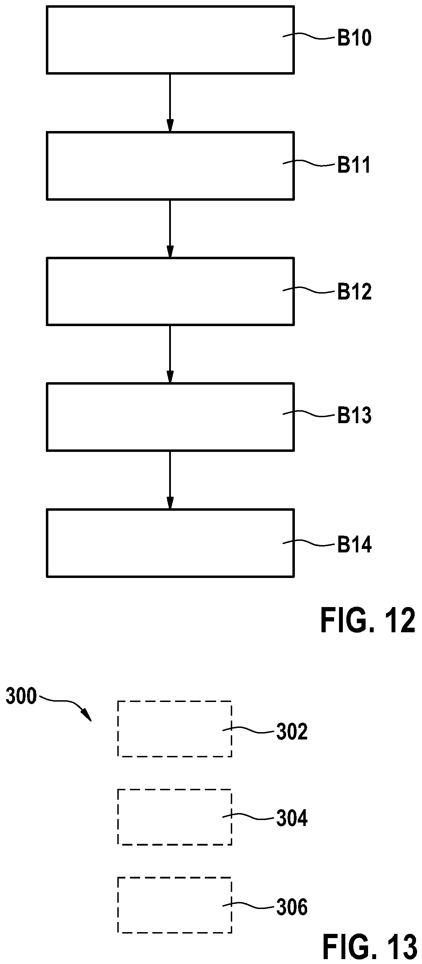

Fig. 12 exemplarily depicts further aspects according to some embodiments. Block B10 symbolizes that new position information is available from the localization system 20. Block B11 symbolizes a scan for objects OBJ-1 in an areas surrounding the radio-based position estimation. Block B12 symbolizes a localization of the object OBJ-1 based on camera data CD, e.g. video and/or images, as obtained from the camera 10-1. Block B13 symbolizes an information fusion process according to some embodiments, e.g. combining the position information POS-INF as e.g. obtained from the localization system 20 based on a radio-based position estimation process, with the camera data CD. Block B14 symbolizes an improved estimation of the position of the object OBJ-1 based on the information fusion B13.
Some embodiments, Fig. 13, relate to a use 300 of the method according to the embodiments and/or of the apparatus 200, 1002 according to the embodiments and/or of the control system 1000 according to the embodiments and/or of the computer program PRG according to the embodiments and/or of the computer-readable storage medium SM according to the embodiments and/or of the data carrier signal DCS according to the embodiments for at least one of: a) determining 302 control information CTRL-INF for at least temporarily controlling an operation of the control system 1000 and/or an operation of the at least one camera 10-1, b) optimizing 304 a resource usage of the camera system and/or of at least one component 10-1 of the camera system, c) optimizing 306 a resource usage of a network system 30 associated with the camera system and/or of at least one component 10-1 of the camera system and/or of at least one component 32 of the network system 30.

## Claims

1. Method of operating a control system (1000) for controlling at least one camera (10-1), comprising: determining (100) position information (POS-INF) characterizing a position (POS) of at least one object (OBJ-1), determining (102), based on the position information (POS-INF), control information (CTRL-INF) for at least temporarily controlling (104) an operation of the control system (1000) and/or an operation of the at least one camera (10-1).

2. Method according to claim 1, wherein determining (100) the position information (POS-INF) comprises at least one of: a) receiving (100a) the position information (POS-INF), e.g. from a localization system (20), e.g. an external localization system (20), b) determining (100b) the position information (POS-INF), e.g. by the control system (1000) and/or a component (1002) of the control system (1000) itself.

3. Method according to at least one of the preceding claims, comprising:
optimizing (104a) an operation of the at least one camera (10-1) according to at least one optimization criterion, wherein for example the at least one optimization criterion is at least one of: a) electrical energy consumption, b) usage of network resources of a network (30) the at least one camera (10-1) is configured to use for data exchange.

4. Method according to at least one of the preceding claims, comprising at least one of: a) controlling (104b), e.g. by means of the control system (1000), an activation (ACT) and/or deactivation (DEACT) of the at least one camera (10-1), b) controlling (104c), e.g. by means of the control system (1000), a configuration (CFG) of the at least one camera (10-1).

5. Method according to at least one of the preceding claims, comprising:
determining (110) network control information (NW-CTRL-INF), e.g. based on at least one of the position information (POS-INF) and the control information (CTRL-INF), for at least one network (30) or the at least one network (30) the at least one camera (10-1) is configured to use for data exchange, and, optionally, controlling (112) at least one component of the network (30) based on the network control information (NW-CTRL-INF).

6. Method according to claim 5, wherein the network control information (NW-CTRL-INF) indicates to the network (30), e.g. to a network controller (32), to a) activate and/or to deactivate at least a part of the network (30), and/or to b) prioritize network traffic associated with the at least one camera (10-1).

7. Method according to at least one of the preceding claims, further comprising at least one of: a) waiting (120) for the position information (POS-INF) and/or for updated position information (POS-INF'), b) determining (122) whether at least one of the control information (CTRL-INF) and the network control information (NW-CTRL-INF) should be updated, e.g. based on at least one of the position information (POS-INF) and the updated position information (POS-INF'), c) providing (124) a new control information (CTRL-INF') and/or a new network control information (NW-CTRL-INF'), e.g. as the updated control information (CTRL-INF) and/or the updated network control information (NW-CTRL-INF), d) verifying (126) a configuration **characterized by** the new control information (CTRL-INF') and/or the new network control information (NW-CTRL-INF'), e.g. based on at least one of a feasibility, constraints, and policy, e) reconfiguring (128) the at least one camera (10-1) and/or at least one component of the control system (1000) and/or of the network (30), e.g. based on the new control information (CTRL-INF') and/or a new network control information (NW-CTRL-INF')

8. Method according to at least one of the preceding claims, further comprising: using (130) camera data (CD) of the at least one camera (10-1), and, optionally, determining (132) further position information (POS-INF") based on the position information (POS-INF) and the camera data (CD).

9. Apparatus (200) for performing the method according to at least one of the preceding claims.

10. Control system (1000) for controlling at least one camera (10-1), comprising at least one apparatus (200) according to claim 9.

11. Control system (1000) according to claim 10, further comprising at least one of: a) the at least one camera (10-1), b) a or the localization system (20), c) a or the network controller (32), d) one or more processing devices (40) for processing camera data (CD).

12. A computer program (PRG) comprising instructions which, when the program (PRG) is executed by a computer (202), cause the computer (202) to carry out the method according to at least one of the claims 1 to 8.

13. A computer-readable storage medium (SM) comprising instructions (PRG') which, when executed by a computer (202), cause the computer (202) to carry out the method according to at least one of the claims 1 to 8.

14. A data carrier signal (DCS) carrying and/or characterizing the computer program (PRG) of claim 12.

15. Use of the method according to at least one of the claims 1 to 8 and/or of the apparatus (200) according to claim 9 and/or of the control system (1000) according to at least one of the claims 10 to 11 and/or of the computer program (PRG) according to claim 12 and/or of the computer-readable storage medium (SM) and/or of the data carrier signal (DCS) for at least one of: a) determining (102; 302) control information (CTRL-INF) for at least temporarily controlling (104) an operation of the control system (1000) and/or an operation of the at least one camera (10-1),
b) optimizing (304) a resource usage of the camera system (1000) and/or of at least one component (110-1) of the camera system (1000), c) optimizing (306) a resource usage of a network system (20) associated with the camera system (1000) and/or of at least one component (110-1) of the camera system (1000) and/or of at least one component (20-1) of the network system (20).
